(19) Europäisches Patentamt
European Patent Office
Office européen des brevets

(11) **EP 1 131 269 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(21) Anmeldenummer: **99948746.5**

(22) Anmeldetag: **10.09.1999**

(51) Int Cl.^7: **C04B 40/00**

(86) Internationale Anmeldenummer:
**PCT/EP99/06687**

(87) Internationale Veröffentlichungsnummer:
**WO 00/017128 (30.03.2000 Gazette 2000/13)**

(54) **ADDITIVE FÜR ZEMENT ENTHALTENDE MINERALISCHE BAUSTOFFE**

ADDITIVES FOR MINERAL BUILDING MATERIALS CONTAINING CEMENT

ADDITIFS POUR MATERIAUX DE CONSTRUCTION MINERAUX CONTENANT DU CIMENT

(84) Benannte Vertragsstaaten:
**AT BE CH CY DE DK ES FI FR GB GR IE IT LI LU MC NL PT SE**

(30) Priorität: **18.09.1998 DE 19842859**

(43) Veröffentlichungstag der Anmeldung:
**12.09.2001 Patentblatt 2001/37**

(73) Patentinhaber: **BASF AKTIENGESELLSCHAFT**
**67056 Ludwigshafen (DE)**

(72) Erfinder:
- **BÜCHNER, Karl-Heinz**
  **D-68804 Altlussheim (DE)**
- **EHLE, Michael**
  **D-67071 Ludwigshafen (DE)**
- **PERNER, Johannes**
  **D-67434 Neustadt (DE)**
- **OPPENLÄNDER, Knut**
  **D-67061 Ludwigshafen (DE)**
- **HARTMANN, Markus**
  **D-67433 Neustadt (DE)**
- **GÜNTHER, Wolfgang**
  **D-67582 Mettenheim (DE)**
- **KRONER, Matthias**
  **D-67304 Eisenberg (DE)**

(56) Entgegenhaltungen:
**WO-A-83/02938**
**DE-A- 19 653 524**
**FR-A- 2 706 447**

- **PATENT ABSTRACTS OF JAPAN vol. 1996, no. 01, 31. Januar 1996 (1996-01-31) & JP 07 232945 A (NIPPON OIL & FATS CO LTD), 5. September 1995 (1995-09-05) -& DATABASE WPI Week 199544 Derwent Publications Ltd., London, GB; AN 1995-340091 XP002128503**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 131 269 B1

## Beschreibung

Die Erfindung betrifft Mischungen aus mindestens einem verflüssiger auf der Basis von Polycarboxylaten für Zement enthaltende mineralische Baustoffe und mindestens einem Entlüfter sowie die Verwendung von wässrigen Lösungen solcher Mischungen als Additive für Zement enthaltende mineralische Baustoffe.

Aus der WO-A-83/02938 sind hydraulische Zementmischungen bekannt, die ethoxylierte oder propoxylierte Polyamine oder Polyethylenimine zur Erhöhung der Festigkeit enthalten. Aus der DE-A-44 20 444 sind Additive für Zement enthaltende Zusammensetzungen bekannt. Sie enthalten mindestens einen Verflüssiger für Zement und mindestens ein Antischaummittel. Als Verflüssiger kommen beispielsweise wässrige Lösungen von Copolymerisaten in Betracht, die in einpolymerisierter Form monoethylenisch ungesättigte Carbonsäuren und Polyalkylenglykolester von Acrylsäure oder Methacrylsäure enthalten. Die Verflüssiger werden in Kombination mit einem Antischaummittel eingesetzt, das entweder in der Polymerlösung gelöst oder darin in Teilchen mit einem Durchmesser von nicht mehr als 20 µm dispergiert ist. Bei den Antischaummitteln handelt es sich beispielsweise um Additionsprodukte von Ethylenoxid und/oder Propylenoxid an Alkohole oder Phenole. Sofern es sich bei solchen Mischungen nicht um klare wässrige Lösungen handelt, sind solche Additive nicht ausreichend lagerstabil, sondern trennen sich in zwei Phasen.

Aus der DE-A-19653524 sind Copolymerisate aus ethylenisch ungesättigten Carbonsäuren und Polyalkylenglykolestern der Acrylsäure oder Methacrylsäure bekannt, die durch Polymerisieren der Monomeren in Gegenwart von gebundenen Phosphor enthaltenden Verbindungen erhältlich sind. Solche Copolymerisate sind sehr wirksame Verflüssiger für Zementmischungen wie Beton oder Mörtel. Sie werden in Mengen von beispielsweise 0,01 bis 10, vorzugsweise 0,05 bis 3 Gew.-%, bezogen auf das Gewicht des Zements, eingesetzt. Die Verflüssiger werden vorteilhafterweise gemeinsam mit Antischaummitteln eingesetzt, um den Gehalt an Luftporen herabzusetzen. Zur Reduzierung von Luftporen geeignete Entlüfter sind beispielsweise Produkte auf Basis von Polyalkylenoxiden wie Anlagerungsprodukte von Ethylenoxid oder Propylenoxid an Alkohole oder Phenole, Phosphorsäureester wie Tributylphosphat oder Triisobutylphosphat, Phthalate wie Dibutylphthalat, Siloxane wie Polydimethylsiloxan oder Phosphate ethoxylierter Fettalkohole wie Ethylenoxidstearylphosphat. Derartige Entlüfter werden üblicherweise in Mengen von 0,05 bis 10, vorzugsweise 0,5 bis 5 Gew.-%, bezogen auf die als Verflüssiger verwendeten Polymerisate eingesetzt.

Als Verflüssiger für mineralische Baustoffe werden außerdem Homound Copolymerisate von ethylenisch ungesättigten Carbonsäuren und Dicarbonsäuren mit Styrol (EP-A-0 306 449) bzw. Isobuten oder Diisobuten (EP-A-0 338 293, US-A-4 586 960 und US-A-4 906 298) verwendet. Beim Einarbeiten von Verflüssigern auf Basis von Polycarboxylaten werden beträchtliche Mengen an Luft in mineralische Baustoffe eingetragen, so daß aufgrund der Luftporen im Beton Hohlräume gebildet werden, was zu einer signifikanten Verschlechterung der mechanischen Eigenschaften und Beständigkeit des Betons führt. Um den Gehalt an Luftporen im Beton bei der Verwendung von Verflüssigern zu reduzieren, setzt man die Verflüssiger meistens zusammen mit Entlüftern ein. Mischungen aus Verflüssigern auf Basis von Polycarboxylaten und Entlüftern der oben beschriebenen Art sind jedoch nicht ausreichend lagerstabil.

Der vorliegenden Erfindung liegt die Aufgabe zugrunde, lagerstabile Mischungen aus einem Verflüssiger auf der Basis von Polycarboxylaten für Zement enthaltende mineralische Baustoffe und mindestens einem Entlüfter zur Verfügung zu stellen.

Die Aufgabe wird erfindungsgemäß gelöst mit Mischungen aus mindestens einem Verflüssiger auf der Basis von Polycarboxylaten für Zement enthaltende mineralische Baustoffe und mindestens einem Entlüfter, wenn die Mischungen als Entlüfter butoxylierte Polyalkylenpolyamine oder deren Salze enthalten. Besonders bevorzugt sind solche Mischungen, die als Entlüfter wasserlösliche butoxylierte Polyethylenimine enthalten.

Unter mineralischen Baustoffen sind Zubereitungen zu verstehen, die als wesentliche Bestandteile mineralische Bindemittel wie Kalk und/oder insbesondere Zement sowie als Zuschläge dienende Sande, Kiese, gebrochene Gesteine oder sonstige Füllstoffe wie natürliche oder synthetische Fasern enthalten. Die mineralischen Baustoffe werden in der Regel durch Zusammenmischen der mineralischen Bindemittel wie Zement und der Zuschläge zusammen mit Wasser in eine gebrauchsfertige Zubereitung überführt, die sowohl an der Luft als auch unter Wasser steinartig aushärtet. Damit die Zement enthaltenden mineralischen Baustoffe bei einem möglichst geringen Verhältnis von Wasser zu Zement günstige anwendungstechnische Eigenschaften haben, d.h. daß sie pumpbar sind, verwendet man beispielsweise Polycarboxylate, die in den oben angegebenen Literaturstellen beschrieben sind. Geeignete Polycarboxylate sind beispielsweise Homo- und Copolymerisate von Acrylsäure oder Methacrylsäure, Copolymerisate aus Styrol und Maleinsäureanhydrid, Copolymerisate aus Isobuten und Maleinsäureanhydrid oder Copolymerisate aus Diisobuten und Maleinsäureanhydrid. Besonders bevorzugte Verflüssiger für Zement enhaltende mineralische Baustoffe sind beispielsweise Copolymerisate aus mit einem Mol Acrylsäure oder Methacrylsäure veresterten Polyalkylenglykolen und Acrylsäure und/oder Methacrylsäure. Solche Copolymerisate werden beispielsweise in den zum Stand der Technik genannten Veröffentlichungen DE-A 4420444 und DE-A 19653524 genannt.

Da bei alleiniger Verwendung von Polycarboxylaten als Verflüssiger für Zement enthaltende mineralische Baustoffe der Luftporengehalt in den Baustoffen relativ stark erhöht wird, verwendet man die üblichen Verflüssiger erfindungsgemäß in Verbindung mit butoxylierten Polyalkylenpolyaminen oder deren Salzen zur Senkung des Luftporengehalts in mineralischen Baustoffen. Polyalkylenpolyamine, die butoxyliert werden, sind beispielsweise Diethylentriamin, Triethylentetramin, Tetraethylenpentamin, Pentaethylenhexamin, 3-(2-Aminoethyl)aminopropylamin, 2-(Diethylamino)ethylamin, 3-(Dimethylamino)propylamin, Dimethyldipropylentriamin, 4-Aminoethyloctan-1,8-diamin, 3-(Diethylamino))propylamin, N,N-Diethyl-1,4-pentandiamin, Dipropylentriamin, Bis(hexamethylen)triamin, N,N-Bis (aminopropyl)methylamin, N,N-Bis(aminopropyl)ethylamin, N,N-Bis(aminopropyl)hexylamin, N,N-Bis(aminopropyl) octylamin, N,N-Dimetyldipropylentriamin, N,N-Bis(3-dimethylaminopropyl)amin, N-(Aminoethyl)butylendiamin, N-(Aminopropyl)butylendiamin, Bis(aminopropyl)butylendiamin und Polyethylenimine. Die Polethylenimine haben beispielsweise Molmassen von 200 bis 5000, vorzugsweise 400 bis 3000. Besonders bevorzugt werden Polyethylenimine mit Molmassen von 600 bis 2000 für die Butoxylierung eingesetzt.

Die butoxylierten Polyalkylenpolyamine enthalten beispielsweise pro Stickstoffgruppierung 0,1 bis 10 Mol Butylenoxid angelagert. Bevorzugt eingesetzte Entlüfter, die durch Butoxylierung von Polyethyleniminen mit Molmassen von 200 bis 5000 mit 0,1 bis 10 Mol Butylenoxid pro Mol Ethylenimineinheiten in Polyethylenimin erhältlich sind. Bevorzugt werden solche Reaktionsprodukte als Entlüfter verwendet, die durch Butoxylierung von Polyethyleniminen mit Molmassen von 400 bis 3000 mit 0,3 bis 5 Mol Butylenoxid pro Mol Ethenimineinheiten im Polyethylenimin erhältlich sind. Die besten Ergebnisse bezüglich der Entlüftung werden mit Reaktionsprodukten erzielt, die durch Butoxylierung von Polyethyleniminen mit Molmassen von 600 bis 2000 mit 0,8 bis 2 Mol Butylenoxid pro Mol Ethylenimineinheiten im Polyethylenimin erhältlich sind.

Die Reaktionsprodukte von Butylenoxid mit Polyalkylenpolyaminen können direkt in der Form verwendet werden, wie sie bei der Butoxylierung anfallen oder auch als Salz, z.B. mit Mineralsäuren oder organischen Säuren wie Carbonsäuren oder Sulfonsäuren. Die Butoxylierung der Polyalkylenpolyamine kann einstufig oder auch zweistufig durchgeführt werden. Bei einstufiger Verfahrensführung legt man beispielsweise die Polyalkylenpolyamine in einem Reaktor mit einem alkalischen Katalysator vor und preßt die erforderliche Menge Butylenoxid auf. Die Reaktionstemperatur kann beispielsweise 25 bis 150°C betragen. Bei einer mehrstufigen Anlagerung von Butylenoxid geht man beispielsweise so vor, daß man in der ersten Stufe eine wäßrige Lösung eines Polyalkylenpolyamins in einem mit einem Rührer versehenen Druckgefäß vorlegt und bei einer Temperatur von 25 bis 150°C so viel Butylenoxid einwirken läßt, daß primäre und sekundäre Aminogruppen in Aminobutanolgruppen überführt werden. In der zweiten Stufe der Anlagerung von Butylenoxid entfernt man zunächst das Wasser, setzt gegebenenfalls ein organisches Lösemittel ein und lagert dann in Gegenwart eines alkalischen Katalysators Butylenoxid an das in der ersten Reaktionsstufe erhaltene Reaktionsprodukt an. Als Katalysator verwendet man beispielsweise Natriummethylat, Kalium-tert.butylat, Kaliumhydroxid, Natriumhydroxid, Natriumhydrid, Kaliumhydrid oder auch basische Ionenaustauscher. Die weitere Butoxylierung des in der ersten Stufe erhaltenen Produkts erfolgt bei 25 bis 150°C. Für die Butoxylierung kann man 1,2-Butylenoxid, 2,3-Butylenoxid oder auch Mischungen der genannten Butylenoxide einsetzen. Bevorzugt ist die Verwendung von 1,2-Butylenoxid.

Die butoxylierten Polyalkylenpolyamine können in Wasser gelöst werden. Sofern sie in Form der freien Basen in Wasser unlöslich oder schwer löslich sind, fügt man eine Mineralsäure oder eine organische Säure, z.B. Carbonsäure oder Sulfonsäure zu. Dadurch bilden sich Salze von butoxylierten Polyalkylenpolyaminen, die in Wasser leicht löslich sind. Die Salzbildung kann partiell erfolgen, z.B. zu 5 bis 50, vorzugsweise 10 bis 30 Gew.-% oder auch vollständig sein. Man kann beispielsweise wäßrige Lösungen von butoxylierten Polyalkylenpolyaminen herstellen, deren Konzentration an Butoxylierungsprodukten 10 bis 90, vorzugsweise 50 bis 70 Gew.-% beträgt. Zur Salzbildung kann man beispielsweise Mineralsäuren wie Salzsäure, Schwefelsäure oder Phosphorsäure oder Carbonsäuren verwenden. Geeignete Carbonsäuren sind beispielsweise Ameisensäure, Essigsäure und Propionsäure. Weitere geeignete organische Säuren sind beispielsweise Toluolsulfonsäure, Benzolsulfonsäure, und Alkylsulfonsäure wie Methansulfonsäure. Vorzugsweise verwendet man zur Bildung von wasserlöslichen Salzen von butoxylierten Polyalkylenpolyaminen Essigsäure.

Die butoxylierten Polyalkylenpolyamine können einem mineralischen Baustoff, der einen Verflüssiger auf der Basis von Polycarboxylaten enthält, in Form der freien Basen oder als Salz zugesetzt werden. Bezogen auf 100 Gewichtsteile eines Verflüssigers auf Basis eines Polycarboxylats im mineralischen Baustoff verwendet man 0,3 bis 30, vorzugsweise 0,3 bis 3 Gewichtsteile eines butoxylierten Polyalkylenpolyamins oder eines Salzes davon zur Reduzierung des Luftporengehalts im Beton.

Um die gewünschten anwendungstechnischen Eigenschaften der gebrauchtsfertigen Zement enthaltenden mineralischen Baustoffe einzustellen, verwendet man vorzugsweise eine wäßrige Lösung von Mischungen aus einem Polycarboxylat und wasserlöslichen butoxylierten Polyalkylenpolyaminen. Gegenstand der Erfindung sind daher auch wäßrige Lösungen von Mischungen aus

(a) einem wasserlöslichen Copolymerisat aus 98 bis 2 Gew.-% Einheiten von Estern der Formel (I)

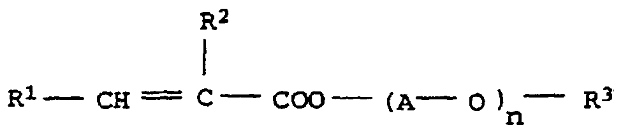 (I),

in der $R^1$, $R^2$ gleich oder verschieden sind und für H oder $CH_3$ stehen, A eine Alkylengruppe mit 2 bis 4 C-Atomen bedeutet $R^3$ H oder $C_1$-$C_{22}$-Alkyl ist und n eine Zahl von 1 bis 300 bedeutet, und 2 bis 98 Gew.-% Einheiten von Acrylsäure, Methacrylsäure, deren Alkalimetall- und Ammoniumsalzen sowie deren Gemischen und

(b) wasserlöslichen butoxylierten Polyalkylenpolyaminen, wobei die Mischungen auf 100 Gew.-Teile der Komponente (a) 0,3 bis 30 Gew. Teile der Komponente (b) enthalten und die Konzentration der Komponente (a) in der wäßrigen Lösung 5 bis 80 Gew.-% beträgt.

Besonders bevorzugt sind solche Verflüssiger, bei denen das wasserlösliche Copolymerisat 5 bis 50, insbesondere 15 bis 30 Alkylenoxideinheiten enthält. Als Alkylenoxide kommen beispielsweise Ethylenoxid, Propylenoxid und Butylenoxide in Betracht, wobei bevorzugt Ethylenoxid verwendet wird. Man kann jedoch auch statistische Polymere oder Blockcopolymerisate aus Ethylenoxid und Propylenoxid oder aus Ethylenoxid, Propylenoxid und Butylenoxid zur Herstellung der Ester der Formel (I) verwenden. Außer in den Literaturstellen, die oben zum Stand der Technik bereits genannt wurden, werden als Verflüssiger für Zement enthaltende mineralische Baustoffe geeignete Copolymerisate in der EP-A 0 753 488, der EP-A 734 359 sowie in der JP-A-58/74552 beschrieben. Besonders bevorzugte Verflüssiger werden beispielsweise durch radikalische Copolymerisation von 60 bis 90 Gew.-% mindestens einer Verbindung der oben angegebenen Formel (I) und 10 bis 40 Gew.-% Acrylsäure, Methacrylsäure oder deren Mischungen, wobei die Summe der Gewichtsprozente jeweils 100 beträgt, in wäßriger Lösung hergestellt. Von besonderem Vorteil sind hierbei solche Copolymerisate, die in Gegenwart von 00,1 bis 50 Gew.-%, bezogen auf die zu polymerisierenden Monomeren an Verbindungen hergestellt worden sind, die Phosphor in gebundener Form enthalten. Geeignete Verbindungen dieser Art sind beispielsweise Phosphinsäure, hypophosphorige Säure, Phosphonsäure, phosphorige Säure und die Salze der genannten Säuren. Die Molmassen der als Verflüssiger zu verwendeten Polymerisate liegt beispielsweise in dem Bereich von 10 000 bis 500 000.

Die oben beschriebenen Mischungen aus einem Verflüssiger auf Basis eines wasserlöslichen Copolymerisats und einem Entlüfter enthalten zur Reduzierung der Luftporen im Beton vorzugsweise wasserlösliche butoxylierte Polyethylenimine oder deren Salze. Als Komponente (b) der wäßrigen Mischungen verwendet man vorzugsweise die Reaktionsprodukte, die durch Butoxylierung von Polyethyleniminen mit Molmassen von 200 bis 5000 mit 0,1 bis 10 Mol Butylenoxid pro Mol Ethylenimineinheiten im Polyethylenimin erhältlich sind, oder Salze dieser Reaktionsprodukte. Besonders vorteilhaft sind als Komponente (b) der wäßrigen Mischungen solche Reaktionsprodukte, die durch Butoxylierung von Polyethyleniminen mit Molmassen von 400 bis 3000 mit 0,3 bis 5 Mol Butylenoxid pro Mol Ethylenimineinheiten im Polyethylenimin erhältlich sind, oder Salze dieser Reaktionsprodukte. Für die meisten praktischen Anwendungen werden wäßrige Mischungen eingesetzt, die als Entlüfter zur Reduzierung der Luftporen in Beton Reaktionsprodukte enthalten, die durch Butoxylierung von Polyethyleniminen mit Molmassen von 600 bis 2000 mit 0,8 bis 2 Mol Butylenoxid pro Mol Ethylenimineinheiten im Polyethylenimin erhältlich sind, oder Salze dieser Reaktionsprodukte. Die oben beschriebenen Mischungen werden als Additive für Zement enhaltende mineralische Baustoffe verwendet. Bezogen auf Zement verwendet man dabei beispielsweise 0,01 bis 10, vorzugsweise 0,05 bis 3 Gew.-% einer Mischung aus den oben beschriebenen Komponenten (a) und (b), wobei die Mischungen aus den Komponenten (a) und (b) vorzugsweise in Form einer wäßrigen Lösung eingesetzt werden. Der pH-Wert der wäßrigen Lösungen solcher Msichungen beträgt beispielsweise 6 bis 12 und liegt vorzugsweise unterhalb von 10.

Die oben beschriebenen Mischungen aus einem Polycarboxylat und mindestens einem butoxyliertem Polyalkylenpolyamin oder deren Salzen werden zwar meistens in Form von wäßrigen Lösungen eingesetzt, die z.B. 5 bis 80 Gewichtsprozent Verflüssiger und Entlüfter gelöst enthalten, sie können jedoch auch in feinteiliger wasserfreier Form, z.B. als Pulver oder als Granulat, zu Zement, Gips oder Kalk als Additiv zur Herstellung mineralischer Baustoffe zugesetzt werden. Besonders bevorzugt sind hierbei pulverförmige Mischungen aus Zement und einer Kombination aus Verflüssiger und Entlüfter, wobei der Zement 0,01 bis 10 Gew.-% der pulverförmigen Kombination aus Verflüssiger und Entlüfter in möglichst gleichmäßiger Verteilung enthält.

Sofern sich aus dem Zusammenhang nichts anderes ergibt, bedeuten die Prozentangaben in den Beispielen jeweils Gew.-%, die Teile sind Gewichtsteile.

Bestimmung des mittleren Molekulargewichtes

Die Bestimmung des gewichtsmittleren Molekulargewichtes erfolgte durch Gel-Permeations-Chromatographie (=GPC) mit wäßrigen Elutionsmitteln. Die Kalibrierung erfolgte mit einem eng verteilten Na-Polyacrylat-Standard. Als Elutionsmittel wurde eine wäßrige Lösung von Kaliumdihydrogenphosphat und Natriumchlorid eingesetzt. Als interner Standard wurde Polyethylenglykol verwendet. Die Chromatographiesäulen waren mit TSK PW-XL 3000 und TSK PW-XL 5000 (Fa. TosoHaas) als stationäre Phase beladen. Zur Detektion wurde ein Differentialrefraktometer eingesetzt.

Bestimmung des K-Wertes

Die K-Werte der wäßrigen Natriumsalzlösungen der Copolymerisate wurden nach H. Fikentscher, Cellulose-Chemie, Band 13, 58-64 und 71-74 (1932) in wäßriger Lösung bei einem pH-Wert von 7, einer Temperatur von 25°C und einer Polymerkonzentration des Natriumsalzes des Copolymerisates von 1 Gew.-% bestimmt.

Bestimmung des Feststoffgehaltes

In ein Alu-Schälchen wird eine definierte Menge der Probe (ca. 0,5 - 1 g) eingewogen (Einwaage). Die Probe wird unter einer IR-Lampe (160 Volt) für 30 Minuten getrocknet. Danach wird erneut die Masse der Probe bestimmt (Auswaage). Der prozentuale Feststoffgehalt FG errechnet sich wie folgt:

$$FG = Auswaage \times 100 / Einwaage\ [Gew.\%]$$

Anwendungstechnische Prüfungen

Prüfverfahren für Betonverflüssiger auf Basis der DIN 1048 Teil 1 (Prüfung der Verflüssigungswirkung von Additiven bei Beton)
Geräte:

- Multi Flow Rührer Typ SE/GB (Elektromotor)
- Rührbehälter (h=20,7cm ; d=40,6cm)
- Ausbreittisch (700 mm x 700 mm mit beweglicher oberer Platte s. DIN 1048 Teil 1, 3.2.1.1)
- Kegelstumpfform (Innendurchmesser oben : 130 mm; Innendurchmesser unten: 200 mm; s. DIN 1048 Teil 1, 3.2.1.1)
- Luftporengehaltmeßgerät (s. DIN 1048 Teil 1, 3.5.1 ); Probenbehälter (h=8,3cm ; d=12,3cm) mit aufschraubbarem Druckmeßgerät
- Rütteltisch (elektrisch)
- Stoppuhr
- Holzstab (d=1.5cm ; 1=55cm)
- Handschaufel (Fassungsvermögen ca. 0,6L)
- Kunststoffwürfel-Form (Innenkantenlänge (L * B * H = 15cm * 15cm * 15cm; an einer Seite offen)

Einsatzstoffe:

| Ansatz: Mischungsverhältnis Zement/Zuschlag 1:5,56 Sieblinie B 16 | | |
|---|---|---|
| Quarzsand | F34 | 825 g |
| Quarzsand | 0,15 - 0,6 mm | 1665 g |
| Quarzsand | 0,5 - 1,25 mm | 2715 g |
| Quarzsand | 1,5 - 3,0 mm | 1485 g |
| Kies | 3 - 8 mm | 3765 g |
| Kies | 8 - 16 mm | 3330 g |
| Heidelberger Zement CEM I 32,5R | | 2475 g |
| Trinkwasser | | 1081 g |

Verflüssiger gem. Tabelle 1 (% Verflüssiger, bezogen als festes Polymer auf die Menge an eingesetztem Zement; "fest auf fest")

Anmerkungen:

Die mit dem Verflüssiger zugefügte Wassermenge muß vom Anteil des Trinkwassers subtrahiert werden. Das Verhältnis Wasser/Zement beträgt 0,45. Die Qualität des verwendeten Zementes erfolgt nach Sichtprüfung.

Durchführung der Prüfung:

a. Herstellung des Betons:

Die gesamte Menge an Zuschlagstoffen werden in den Rührbehälter eingewogen, und 1 min trocken mit dem Multi Flow Rührgerät gemischt. Danach gibt man unter Rühren innerhalb von 30 sek. zwei Drittel der berechneten Wassermenge zu. Innerhalb der nächsten 30 sek. wird das mit Verflüssiger versetzte restliche Drittel Wasser der Mischung zugegeben. Nun rührt der Beton noch drei Minuten nach. Die Herstellung der Betonmischung ist nach insgesamt 5 min abgeschlossen. Nach Herstellung des Betons wird der erste Wert zur Ermittlung des Ausbreitmaßes gemessen.

b. Ausbreitversuch:

Nach 5 min Rühren der fertigen Betonzusammensetzung erfolgt die erste Messung des Ausbreitmaßes. (s. DIN 1048 Teil 1, 3.2.1.2 Durchführung Ausbreitversuch). Nach Ermittlung des Ausbreitmaßes gibt man den Beton vom Ausbreittisch wieder zurück in den Rührbehälter. Der Beton wird nach insgesamt 29 Minuten 45 Sekunden nochmals 15 s durchgemischt. Die zweite Messung erfolgt nach genau 30 min. Dieser Vorgang wird nach insgesamt 60, 90, 120 min wiederholt bzw. solange bis der gemessene Wert des Ausbreitmaßes sich auf einen Durchmesser von unter 30cm verringert.

c. Luftporengehalt:

Der Luftgehalt von Frischbeton ist mit einem kalibrierten Prüfgerät von 1 1 Inhalt nach dem Druckausgleichverfahren zu messen. Die Bestimmung des Luftporengehaltes erfolgt nach der ersten und jeweiligen letzten Messung des Ausbreitmaßes. Dazu füllt man den Behälter des Luftporengehaltmeßgerätes mit Beton, während der Beton 60s lang auf einem Rütteltisch verdichtet wird. Der Behälter muß nach dem Rüttelvorgang randvoll mit Beton sein. (Durchführung s. DIN 1048 Teil 1, 3.5 Luftgehalt). Danach wird die Messung des Luftporengehaltes durchgeführt.

d. Druckfestigkeitsprüfung:

Aufgrund des Einflusses der zu prüfenden Betonverflüssiger auf die Abbindefähigkeit des Betons wird nach Bedarf eine Druckfestigkeitsprüfung durchgeführt. Die Druckfestigkeitsermittlung erfolgt an eigens hergestellten Probekörpern mit einer Kantenlänge von 15cm*15cm*15cm. Es werden von der Betonmischung mindestens zwei Würfel hergestellt. Die Herstellung der Probekörper erfolgt, indem man die Würfel zur Hälfte mit Beton füllt, den Beton 20 sek. auf dem Rütteltisch verdichtet, danach so viel Beton in die Würfelform einfüllt, daß nach einem weiteren Verdichten von 20 sek. die Betonoberfläche höher ist als der Rand der eigentlichen Form. Abschließend ebnet man die Oberfläche der Probekörper, damit diese mit der Höhe der Würfelform abschließt. Die Lagerung der Probekörper für die Druckfestigkeitsprüfung erfolgt in einem geschlossenen Raum bei ca. 23°C. Sie sind zunächst in ihren Formen abzustellen und durch Abdecken vor Feuchtigkeitsverlust zu schützen. Nach ca.18h werden die Würfel entschalt und nach 24h ab dem Herstellungszeitpunkt der Betonmischung wird ein Würfel mit Hilfe einer Presse abgedrückt. Der erreichte Wert in KN wird in $N/mm^2$ angegeben und gibt Aufschluß über die Festigkeit des Betons nach 24h. Nach einer Lagerungszeit des zweiten Betonwürfels von 28 Tagen ab Herstellung des Betons wird mit dem verbliebenen Probekörper genauso verfahren und die Druckfestigkeit nach 28 Tagen ermittelt.

Bemerkungen:

Vor jeder neuen Meßreihe ist ein Versuch ohne Verflüssiger-Zugabe (0-Wert) durchzuführen. Auch ist darauf zu achten, daß die Umgebungstemperatur konstant ist (23-25°C).

Herstellung der Entlüfter

Entlüfter 1

In einem beheizbaren Autoklaven, der mit einem Rührer versehen ist, wurden 43 g Polyethylenimin der mittleren Molmasse $M_w$ 1300 in Form einer 50 %igen wäßrigen Lösung in einer Stickstoffatmosphäre vorgelegt. Der Autoklav wurde verschlossen und der Reaktorinhalt unter Rühren auf eine Temperatur von 9O°C aufgeheizt. Sobald diese Temperatur erreicht war, preßte man 72 g 1,2-Butylenoxid auf und rührte das Reaktionsgemisch bis zur Druckkonstanz. Danach wurde der Autoklaveninhalt auf 70°C abgekühlt. Aus dem so erhaltenen Reaktionsgemisch entfernte man das Wasser durch Destillation in einem Rotationsverdampfer unter vermindertem Druck. Man erhielt 115 g eines viskosen gelblichen Öls (Elementaranalyse: 12,3 % Stickstoff).

Entlüfter 2

In einem Kolben wurden 43 g Polyethylenimin der mittleren Molmasse $M_w$ 800 vorgelegt und mit 2,7 g einer 40 %igen wäßrigen Kalilauge gemischt. Das Gemisch wurde am Rotationsverdampfer im Vakuum der Wasserstrahlpumpe bei einer Temperatur bis zu 120°C entwässert. Das trockene Produkt wurde anschließend in einem beheizbaren und mit einem Rührer versehenen Autoklaven bei 90°C unter einer Stickstoffatmosphäre vorgelegt und dann auf eine Temperatur von 145°C aufgeheizt. Sobald diese Temperatur erreicht war, preßte man 93,6 g 1,2-Butylenoxid auf, rührte das Reaktionsgemisch bis zur Druckkonstanz und kühlte es anschließend auf ca. 80°C ab. Nach dem Entfernen von Wasser aus dem Reaktionsgemisch am Rotationsverdampfer erhielt man 137 g eines viskosen, gelblichen Öls (Elementaranalyse: 11,2 % Stickstoff).

Entlüfter 3

In einem beheizbaren und mit einem Rührer versehenen Autoklaven wurden 43 g Polyethylenimin der mittleren Molmasse $M_w$ 3600 in Form einer 50 %igen wäßrigen Lösung unter einer Stickstoffatmosphäre vorgelegt und nach dem Verschließen des Autoklaven auf eine Temperatur von 120°C erhitzt. Nach Erreichen dieser Temperatur preßt man 72 g 1,2-Butylenoxid auf, rührte das Reaktionsgemisch bis zur Druckkonstanz und kühlte es auf eine Temperatur von 80°C ab. Man erhielt 115 g eines hochviskosen gelblichen Öls (Elementaranalyse: 11,9 % Stickstoff). Dem so erhaltenen Reaktionsprodukt setzte man 5,3 g einer 40 %igen wäßrigen Kalilauge zu, entfernte das Wasser im vakuum, wobei man die Reaktionsmischung bis zu einer Temperatur von 120°C erhitzte. Das so entwässerte Produkt wurde anschließend in einem Rührautoklaven unter einer Stickstoffatmosphäre vorgelegt und darin auf eine Temperatur von 140°C erhitzt. Man preßte dann 24,5 g 1,2-Butylenoxid auf, rührte das Reaktionsgemisch bis zur Druckkonstanz und kühlte es anschließend auf 80°C ab. Man erhielt 141 g eines gelben viskosen Öls (Elementaranalyse: 9,6 % Stickstoff).

Verflüssiger 1

35 %ige wäßrige Lösung eines partiell mit Natronlauge neutralisierten Copolymerisats aus

(a) 80 Gew.-% Methylpolyethylenglykolmethacrylat (hergestellt durch Veresterung von Methylpolyethylenglykol, das 20 Ethylenoxideinheiten enthielt, mit Methacrylsäure) und

(b) 20 Gew.-% Methacrylsäure.

Das Copolymerisat hatte eine mittlere Molmasse $M_w$ von 25 000. Es wurde durch Copolymerisieren der Monomeren in Gegenwart von Natriumhypophosphit gemäß der Lehre der DE-A-19 653 524 hergestellt.

Beispiel 1

In einem Kolben, der mit einem Rührer ausgestattet war, wurden 35 Teile Verflüssiger 1, (bezogen auf den Feststoffgehalt des Verflüssigers) vorgelegt und auf eine Temperatur von 80°C erwärmt. Unter ständigem Rühren gab man bei der genannten Temperatur 0,35 Teile Entlüfter 1 (bezogen auf Feststoffgehalt) zu und rührte die Mischung so lange, bis man eine klare Lösung erhielt. Die Mischung wurde dann auf Raumtemperatur abgekühlt und über einen Zeitraum von 3 Monaten gelagert. Auch nach dieser Zeit lag eine klare Lösung vor. Man konnte weder eine Trübung noch eine Ausfällung feststellen.

Beispiel 2

In einem mit einem Rührer ausgestatteten Kolben legte man 35 Teile des Verflüssigers 1 (berechnet auf den Feststoffgehalt) vor und erwärmte den Kolbeninhalt auf eine Temperatur von 80°C. Sobald diese Temperatur erreicht war, fügte man 0,35 Teile einer wäßrigen Lösung des Entlüfters 2 (berechnet auf den Feststoffgehalt) zu, die man durch Neutralisieren des Entlüfters 2 mit verdünnter Essigsäure zuvor hergestellt hatte. Man erhielt eine klare Lösung, die auf Raumtemperatur abgekühlt und 3 Monate bei Raumtemperatur gelagert wurde. Die Lösung war danach noch klar. Man konnte weder eine Trübung noch irgendeine Ausfällung feststellen.

Beispiel 3

In einem mit einem Rührer ausgestatteten Kolben legte man 35 Teile des Verflüssigers 1 (berechnet auf den Feststoffgehalt) vor und erwärmte die Lösung auf eine Temperatur von 80°C. Bei dieser Temperatur gab man dann 0,35 Teile des Entlüfters 3 (bezogen auf den Feststoffgehalt) zu und rührte die Mischung bei einer Temperatur von 80°C. Nach ca. 90-minütigem Rühren erhielt man eine klare Lösung, die auf Raumtemperatur abgekühlt und 3 Monate bei dieser Temperatur gelagert wurde. Auch nach einer Lagerung von 3 Monaten war die Lösung klar. Man konnte keine Trübung oder Ausfällungen feststellen.

Beispiele 4 - 8

Die Entlüfter 1 bis 3 wurden bezüglich ihrer Wirkung als Luftporenreduzierer in einer Betonmischung geprüft. Die Untersuchungen wurden nach der oben angegebenen Vorschrift gemäß DIN 1048 durchgeführt. Für die Beispiele 4 bis 8 verwendete man jeweils 0,24 % Verflüssiger 1 (100 %ig gerechnet), bezogen auf die eingesetzte Menge an Zement. Das Verhältnis von Wasser zu Zement betrug in allen Fällen 0,45. Die in den Beispielen verwendeten Entlüfter und der Luftporengehalt der Betonmischung sind in Tabelle 1 angegeben.

Tabelle 1

| Beispiel | Entlüfter Nr. | Menge des Entlüfters [%], bezogen auf Verflüssiger 1 | Luftporengehalt [Vol.-%] |
|---|---|---|---|
| 4 | 2 | 0,86 | 4,2 |
| 5 | 2 | 1,40 | 3,2 |
| 6 | 1 | 0,86 | 3,8 |
| 7 | 1 | 1,40 | 3,2 |
| 8 | 3 | 1,40 | 4,2 |

Beispiel 9

In diesem Beispiel wurden verschiedene Mengen an Entlüfter 1, bezogen auf Verflüssiger 1, eingesetzt und jeweils der Lufporengehalt bestimmt. Die jeweils eingesetzten Mengen und die damit erhaltenen Ergebnisse sind in Tabelle 2 angegeben. Wie daraus ersichtlich ist, bewirkt eine Erhöhung der Dosierung des Entlüfters eine Verminderung des Luftporengehalts im Beton. Für diesen Test verwendete man Heidelberger Zement CEMI 32,5 R.
Sieblinie: B 16 MV: 1:5,56
Zement: 2475 g.

Für sämtliche in Tabelle 2 angegebenen Untersuchungen verwendete man 0,26 % Verflüssiger 1 (100 %ig gerechnet), bezogen auf die verwendete Menge an Zement. Das Verhältnis von Wasser : Zement betrug in allen Fällen 0,47. Die Mengen an Entlüfter, bezogen auf die eingesetzte Menge an Verflüssiger, jeweils 100 %ig berechnet, der Luftporengehalt sowie das Ausbreitmaß sind in Tabelle 2 angegeben.

Tabelle 2

| Bsp. 9 | Entlüfter 1 [%], bezogen auf Verflüssiger 1 (jeweils 100%ig gerechnet) | Luftporengehalt nach Vol.% | Ausbreitmaß in cm nach Minuten | | | | |
|---|---|---|---|---|---|---|---|
| | | | 1 | 30 | 60 | 90 | 120 |
| a) | 1,40 | 2,0 | 50 | 39 | 33 | 30 | 28 |
| b) | 1,10 | 2,2 | 55 | 42 | 35 | 32 | 30 |
| c) | 0,86 | 3,8 | 58 | 45 | 35 | 33 | 30 |

Beispiel 10

Das Beispiel 9 wurde mit den aus der Tabelle 3 ersichtlichen Änderungen wiederholt. Dabei wurden die in Tabelle 3 angegebenen Ergebnisse erhalten. Während die Mischung aus Entlüfter 1 und Verflüssiger 1 eine klare und lagerstabile Lösung ergab, war die Mischung aus handelsüblichem Phosphorsäurester als Entlüfter und Verflüssiger 1 trüb und separierte nach 48 Stunden.

Mischungen aus Verflüssiger und Entschäumer, die bereits nach kurzer Zeit separieren, sind für einen Einsatz als Additiv für Zement nicht brauchbar.

Tabelle 3

| | [%] Verflüssiger 1, bezogen auf Zement | [%] Entlüfter, bezogen auf Verflüssiger (jeweils 100 %ig gerechnet) | Luftporengehalt [Vol.-%] | Ausbreitmaß (cm) nach Minuten | | | | | Druckfestigkeit [N/mm²] nach | |
|---|---|---|---|---|---|---|---|---|---|---|
| | | | | 1 | 30 | 60 | 90 | 120 | 1 Tag | 28 Tage |
| Beispiel 10 | 0,26 | 1,0 Entlüfter 1 | 3,0 | 58 | 45 | 35 | 33 | 30 | 30 | 56 |
| Vergleichsbeispiel 2 | 0,26 | 1,0 handelsüblicher Entlüfter (Phosphorsäureester) | 3,0 | 55 | 42 | 35 | 33 | 30 | 29 | 54 |

## Patentansprüche

1. Mischungen aus mindestens einem Verflüssiger auf der Basis von Polycarboxylaten für Zement enthaltende mineralische Baustoffe und mindestens einem Entlüfter, **dadurch gekennzeichnet, daß** die Mischungen als Entlüfter butoxylierte Polyalkylenpolyamine oder deren Salze enthalten.

2. Mischungen nach Anspruch 1, **dadurch gekennzeichnet, daß** sie als Entlüfter butoxylierte Polyethylenimine oder deren Salze enthalten.

3. Mischungen nach Anspruch 1 oder 2, **dadurch gekennzeichnet, daß** sie als Entlüfter die Reaktionsprodukte, die durch Butoxylierung von Polyethyleniminen mit Molmassen von 200 bis 5000 mit 0,1 bis 10 Mol Butylenoxid pro Mol Ethylenimineinheiten im Polyethylenimin erhältlich sind, oder Salze dieser Reaktionsprodukte enthalten.

4. Mischungen nach einem der Ansprüche 1 bis 3, **dadurch gekennzeichnet, daß** sie als Entlüfter die Reaktionsprodukte enthalten, die durch Butoxylierung von Polyethyleniminen mit Molmassen von 400 bis 3000 mit 0,3 bis 5 Mol Butylenoxid pro Mol Ethylenimineinheiten im Polyethylenimin erhältlich sind, oder Salze dieser Reaktionsprodukte enthalten.

5. Mischungen nach einem der Ansprüche 1 bis 4, **dadurch gekennzeichnet, daß** sie als Entlüfter die Reaktionsprodukte, die durch Butoxylierung von Polyethyleniminen mit Molmassen von 600 bis 2000 mit 0,8 bis 2 Mol Butylenoxid pro Mol Ethylenimineinheiten im Polyethylenimin erhältlich sind, oder Salze dieser Reaktionsprodukte enthalten.

6. Wäßrige Lösungen aus Mischungen aus

   (a) einem wasserlöslichen Copolymerisat aus 98 bis 2 Gew.-% Einheiten von Estern der Formel (I)

   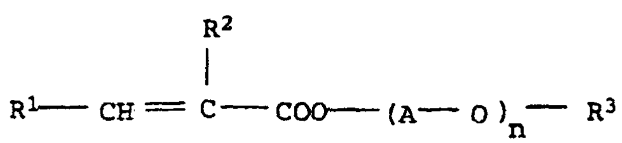

   (I),

   in der $R^1$, $R^2$ gleich oder verschieden sind und für H oder $CH_3$ stehen, A eine Alkylengruppe mit 2 bis 4 C-Atomen bedeutet, $R^3$ H oder $C_1$ bis $C_{22}$-Alkyl ist und n eine Zahl von 1 bis 300 bedeutet, und 2 bis 98 Gew.-% Einheiten von Acrylsäure, Methacrylsäure, deren Alkalimetall- und Ammoniumsalzen sowie deren Gemische und

   (b) butoxylierten Polyalkylenpolyaminen oder deren wasserlöslichen Salze, wobei die Mischungen auf 100 Gew.-Teile der Komponente (a) 0,3 bis 30 Gew.-Teile der Komponente (b) enthalten und die Konzentration der Komponente (a) in der wäßrigen Lösung 5 bis 80 Gew.-% beträgt.

7. Mischungen nach Anspruch 6, **dadurch gekennzeichnet, daß** sie als Komponente (b) wasserlösliche butoxylierte Polyethylenimine oder deren Salze enthalten.

8. Mischungen nach Anspruch 6, **dadurch gekennzeichnet, daß** sie als Komponente (b) die Reaktionsprodukte, die durch Butoxylierung von Polyethyleniminen mit Molmassen von 200 bis 5000 mit 0,1 bis 10 Mol Butylenoxid pro Mol Ethylenimineinheiten im Polyethylenimin erhältlich sind, oder Salze dieser Reaktionsprodukte enthalten.

9. Mischungen nach Anspruch 6, **dadurch gekennzeichnet, daß** sie als Komponente (b) die Reaktionsprodukte, die durch Butoxylierung von Polyethyleniminen mit Molmassen von 400 bis 3000 mit 0,3 bis 5 Mol Butylenoxid pro Mol Ethylenimineinheiten im Polyethylenimin erhältlich sind, oder Salze dieser Reaktionsprodukte enthalten.

10. Mischungen nach Anspruch 6, **dadurch gekennzeichnet, daß** sie als Komponente (b) die Reaktionsprodukte, die durch Butoxylierung von Polyethyleniminen mit Molmassen von 600 bis 2000 mit 0,8 bis 2 Mol Butylenoxid pro Mol Ethylenimineinheiten im Polyethylenimin erhältlich sind oder Salze dieser Reaktionsprodukte enthalten.

**11.** Verwendung der Mischungen nach den Ansprüchen 6 bis 10 als Additiv für Zement enthaltende mineralische Baustoffe.

**12.** Verwendung nach Anspruch 11, **dadurch gekennzeichnet, daß** man 0,01 bis 10 Gew.-% einer Mischung aus den Komponenten (a) und (b), bezogen auf Zement, in Form einer wäßrigen Lösung einsetzt.

**Claims**

**1.** A mixture of at least one air detrainer and at least one polycarboxylate-based plasticizer for mineral building materials comprising cement, which comprises butoxylated polyalkylenepolyamines or their salts as air detrainers.

**2.** A mixture as claimed in claim 1, which comprises butoxylated polyethylenimines or their salts as air detrainers.

**3.** A mixture as claimed in claim 1 or 2, which comprises as air detrainers the reaction products obtainable by butoxylating polyethylenimines having molecular masses from 200 to 5000 with from 0.1 to 10 mol of butylene oxide per mole of ethylenimine units in the polyethylenimine, or salts of these products.

**4.** A mixture as claimed in any one of claims 1 to 3, which comprises as air detrainers the reaction products obtainable by butoxylating polyethylenimines having molecular masses from 400 to 3000 with from 0.3 to 5 mol of butylene oxide per mole of ethylenimine units in the polyethylenimine, or salts of these products.

**5.** A mixture as claimed in any one of claims 1 to 4, which comprises as air detrainers the reaction products obtainable by butoxylating polyethylenimines having molecular masses from 600 to 2000 with from 0.8 to 2 mol of butylene oxide per mole of ethylenimine units in the polyethylenimine, or salts of these products.

**6.** An aqueous solution comprising a mixture of

(a) a water-soluble copolymer containing from 98 to 2% by weight of units of esters of formula (I)

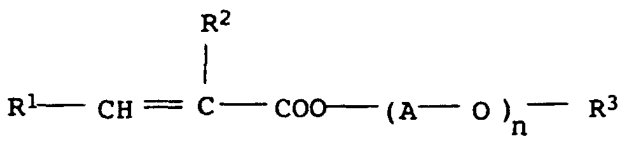

(I),

in which $R^1$ and $R^2$ are identical or different and are H or $CH_3$, A is an alkylene group with 2 to 4 carbon atoms, $R^3$ is H or $C_1$-$C_{22}$-alkyl, and n is from 1 to 300, and from 2 to 98% by weight of units of acrylic acid, methacrylic acid, their alkali metal salts and ammonium salts, and mixtures thereof, and

(b) butoxylated polyalkylenepolyamines or their water-soluble salts, said mixture containing from 0.3 to 30 parts by weight of component (b) per 100 parts by weight of component (a) and the concentration of component (a) in the aqueous solution being from 5 to 80% by weight.

**7.** A mixture as claimed in claim 6, which comprises water-soluble butoxylated polyethylenimines or their salts as component (b).

**8.** A mixture as claimed in claim 6, which comprises as component (b) the reaction products obtainable by butoxylating polyethylenimines having molecular masses from 200 to 5000 with from 0.1 to 10 mol of butylene oxide per mole of ethylenimine units in the polyethylenimine, or salts of these products.

**9.** A mixture as claimed in claim 6, which comprises as component (b) the reaction products obtainable by butoxylating polyethylenimines having molecular masses from 400 to 3000 with from 0.3 to 5 mol of butylene oxide per mole of ethylenimine units in the polyethylenimine, or salts of these products.

**10.** A mixture as claimed in claim 6, which comprises as component (b) the reaction products obtainable by butoxylating polyethylenimines having molecular masses from 600 to 2000 with from 0.8 to 2 mol of butylene oxide per mole

of ethylenimine units in the polyethylenimine, or salts of these products.

**11.** The use of a mixture as claimed in any one of claims 6 to 10 as an additive for mineral building materials comprising cement.

**12.** The use as claimed in claim 11, wherein, based on cement, from 0.01 to 10% by weight of a mixture of components (a) and (b) is employed in the form of an aqueous solution.

## Revendications

**1.** Mélanges d'au moins un agent fluidifiant à base de polycarboxylates, destiné aux matériaux de construction minéraux contenant du ciment, et d'au moins un agent de désaération, **caractérisés en ce que** les mélanges contiennent, comme agents de désaération, des polyalkylènepolyamines butoxylées ou leurs sels.

**2.** Mélanges suivant la revendication 1, **caractérisés en ce qu'**ils contiennent, comme agents de désaération, des polyéthylèneimines butoxylées ou leurs sels.

**3.** Mélanges suivant l'une des revendications 1 et 2, **caractérisés en ce qu'**ils contiennent, comme agents de désaération, les produits réactionnels, que l'on peut obtenir par butoxylation de polyéthylèneimines ayant des masses molaires de 200 à 5.000 avec 0,1 à 10 moles d'oxyde de butylène par mole d'unités éthylèneimine dans la polyéthylèneimine, ou des sels de ces produits réactionnels.

**4.** Mélanges suivant l'une des revendications 1 à 3, **caractérisés en ce qu'**ils contiennent, comme agents de désaération, les produits réactionnels, que l'on peut obtenir par butoxylation de polyéthylèneimines ayant des masses molaires de 400 à 3.000 avec 0,3 à 5 moles d'oxyde de butylène par mole d'unités éthylèneimine dans la polyéthylèneimine, ou des sels de ces produits réactionnels.

**5.** Mélanges suivant l'une des revendications 1 à 4, **caractérisés en ce qu'**ils contiennent, comme agents de désaération, les produits réactionnels, que l'on peut obtenir par butoxylation de polyéthylèneimines ayant des masses molaires de 600 à 2.000 avec 0,8 à 2 moles d'oxyde de butylène par mole d'unités éthylèneimine dans la polyéthylèneimine, ou des sels de ces produits réactionnels.

**6.** Solutions aqueuses constituées de mélanges à base

(a) d'un copolymère soluble dans l'eau formé de 98 à 2% en poids d'unités d'esters de la formule (I) :

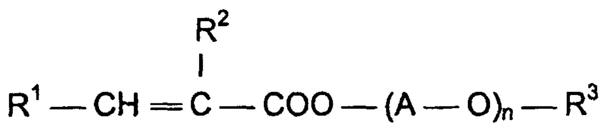

(I)

dans laquelle $R^1$ et $R^2$ sont identiques ou différents et représentent H ou $CH_3$, A représente un groupe alkylène comportant 2 à 4 atomes de C, $R^3$ représente H ou un alkyle en $C_1$-$C_{22}$, et n est un nombre de 1 à 300, et de 2 à 98% en poids d'unités d'acide acrylique, d'acide méthacrylique, de leurs sels de métal alcalin et d'ammonium ainsi que de leurs mélanges, et

(b) de polyalkylènepolyamines butoxylées ou de leurs sels solubles dans l'eau, les mélanges contenant pour 100 parties en poids du composant (a) 0,3 à 30 parties en poids du composant (b) et la concentration du composant (a) dans la solution aqueuse étant de 5 à 80% en poids.

**7.** Mélanges suivant la revendication 6, **caractérisés en ce qu'**ils contiennent, comme composant (b), des polyéthylèneimines butoxylées solubles dans l'eau ou leurs sels.

**8.** Mélanges suivant la revendication 6, **caractérisés en ce qu'**ils contiennent, comme composant (b), les produits réactionnels, que l'on peut obtenir par butoxylation de polyéthylèneimines ayant des masses molaires de 200 à 5.000 avec 0,1 à 10 moles d'oxyde de butylène par mole d'unités éthylèneimine dans la polyéthylèneimine, ou des sels de ces produits réactionnels.

**9.** Mélanges suivant la revendication 6, **caractérisés en ce qu'**ils contiennent, comme composant (b), les produits réactionnels, que l'on peut obtenir par butoxylation de polyéthylèneimines ayant des masses molaires de 400 à 3.000 avec 0,3 à 5 moles d'oxyde de butylène par mole d'unités éthylèneimine dans la polyéthylèneimine, ou des sels de ces produits réactionnels.

**10.** Mélanges suivant la revendication 6, **caractérisés en ce qu'**ils contiennent, comme composant (b), les produits réactionnels, que l'on peut obtenir par butoxylation de polyéthylèneimines ayant des masses molaires de 600 à 2.000 avec 0,8 à 2 moles d'oxyde de butylène par mole d'unités éthylèneimine dans la polyéthylèneimine, ou des sels de ces produits réactionnels.

**11.** Utilisation des mélanges suivant l'une des revendications 6 à 10, comme additifs pour des matériaux de construction minéraux contenant du ciment.

**12.** Utilisation suivant la revendication 11, **caractérisée en ce qu'**on met en oeuvre 0,01 à 10% en poids d'un mélange à base des composants (a) et (b), par rapport au ciment, sous la forme d'une solution aqueuse.